# FASCICULE DE BREVET EUROPEEN

(11) **EP 2 462 299 B1**
(45) Date de publication et mention de la délivrance du brevet: **16.03.2016**
(21) Numéro de dépôt: 10735296.5
(22) Date de dépôt: 27.07.2010
(51) Int. Cl.: E05B 81/20, E05B 47/00, E05B 81/24, F16D 13/08

(54) **ACTIONNEUR A ASSISTANCE A LA FERMETURE POUR SERRURE D'OUVRANT DE VEHICULE AUTOMOBILE ET DISPOSITIF ASSOCIE**
STELLANTRIEB FÜR KRAFTFAHRZEUGTÜRSCHLOSS UND ZUGEHÖRIGE VORRICHTUNG
LOCK ACTUATOR FOR MOTOR VEHICLE DOOR LOCK AND CORRESPONDENT DEVICE

(30) Priorité: 06.08.2009 FR 0903883
(43) Date de publication de la demande: 13.06.2012
(73) Titulaire: U-Shin France SAS, 94046 Créteil Cedex (FR)
(72) Inventeur: PECOUL, Jean, Christophe, F-94042 Créteil (FR)
(74) Mandataire: Cabinet Novitech
(86) Numéro de dépôt international: PCT/EP2010/060924
(87) Numéro de publication internationale: WO 2011/015497

(56) Documents cités:
- DE-A1- 3 418 802
- DE-A1- 4 215 374
- DE-A1- 10 251 354
- DE-A1- 10 251 375
- DE-A1- 19 653 550
- DE-A1- 19 851 396
- FR-A1- 2 806 118
- US-A- 6 019 402

## Description

La présente invention concerne un actionneur à assistance à la fermeture motorisé destiné à commander le déplacement d'un élément d'une serrure d'ouvrant de véhicule automobile en vue de la fermeture de celle-ci.

Une serrure d'ouvrant de véhicule automobile comporte un pêne, porté par un support solidaire d'un ouvrant, destiné à coopérer avec une gâche portée par un dormant, le pêne étant monté pivotant sur le support entre une position d'ouverture, une position de fermeture au premier cran et une position de fermeture au second cran dans laquelle le pêne, une fois en prise avec la gâche, assure la fermeture de l'ouvrant.

La charge ou la force nécessaire pour la rotation du pêne varie selon l'effort de réaction d'un joint élastique intercalé entre l'ouvrant et le montant de l'ouvrant du véhicule, en particulier, on constate une augmentation de l'effort de réaction nécessaire lors de la fermeture de l'ouvrant du fait de la compression du joint.

Un actionneur permet d'assister le déplacement du pêne de sa position de fermeture au premier cran vers sa position de fermeture au second cran pour l'aider à vaincre la charge exercée par le joint de l'ouvrant.

Pour cela, l'actionneur comporte un moteur électrique apte à fournir un couple d'entraînement pour entraîner un moyen d'actionnement du pêne vers sa position de fermeture au second cran.

Dans l'industrie des véhicules automobiles, les constructeurs requièrent que le moteur électrique puisse assurer l'assistance à la fermeture sur de larges plages de fonctionnement, par exemple à la fois sur une grande plage de température extérieure et pour de larges gammes de tension d'alimentation du moteur. A froid, le couple nécessaire en sortie de moteur pour l'assistance à la fermeture de l'ouvrant doit être plus important. De même, suivant l'état de fonctionnement de la batterie du véhicule, la tension d'alimentation du moteur varie et peut modifier les performances du moteur électrique. Cela se traduit par d'importants écarts du couple d'entraînement nécessaire en sortie du moteur.

Le moteur électrique est donc dimensionné pour fonctionner quelques soit les conditions d'utilisation. Cependant, un tel dimensionnement implique nécessairement le dimensionnement approprié des pièces qui participent également à la cinématique de fonctionnement de l'actionneur.

On utilise par exemple des pièces en acier, pouvant supporter des contraintes mécaniques importantes. Toutefois, le moteur électrique et les pièces associées sont alors surdimensionnés dans la majorité des cas d'utilisation dans le seul but de pouvoir répondre à quelques situations extrêmes de fonctionnement.

Par ailleurs, pendant la phase d'assistance à la fermeture, l'espace libre entre l'ouvrant et le dormant peut, suivant la configuration, permettre le passage d'un doigt ou d'un objet. Lorsque l'utilisateur constate qu'un objet est coincé entre l'ouvrant et le dormant alors que les moyens d'assistance à la fermeture sont en cours de réalisation d'un cycle de fermeture, il peut être amené à commander l'ouverture de l'ouvrant. Cette commande de l'ouvrant peut survenir presque immédiatement après en avoir commandé la fermeture, alors même que l'action des moyens d'assistance à la fermeture n'est pas achevée. Il alors nécessaire de découpler le lien entre l'actionneur et le pêne.

Il est connu du document FR2806118 A1, un actionneur de condamnation d'une serrure d'ouvrant d'un véhicule comprend un moteur électrique qui est lié en rotation à un train d'engrenage d'entraînement d'une vis. Le train d'engrenage comprend en outre un limiteur de couple pour absorber un choc provoqué par un arrêt brutal de l'actionneur.

Un but de la présente invention est de proposer une réalisation simplifiée et compacte d'un actionneur électrique pour ouvrant de véhicule automobile assurant un effort d'entraînement sur une large plage de fonctionnement.

Un autre but de l'invention, pris seul ou en combinaison, est que cette réalisation simplifiée et compacte permette également le débrayage des moyens d'assistance à la fermeture dès que l'alimentation électrique est interrompue.

A cet effet, l'invention a pour objet un actionneur à assistance à la fermeture pour serrure d'ouvrant de véhicule automobile selon la revendication 1.

La limitation du couple transmis au moyen de transmission de sortie permet de réduire les contraintes exercées sur les pièces de la chaîne cinématique de l'actionneur. La durée de vie des engrenages est alors allongée et des pièces en matériau plastique peuvent être utilisées. Le moteur électrique et les pièces associées sont alors dimensionnés pour fonctionner sur une plage déterminée de fonctionnement, les moyens de limitation de couple limitant le couple d'entraînement dans les situations de fonctionnement extrêmes. On limite ainsi l'encombrement, le poids et le coût des éléments de l'actionneur.

Le moyen de limitation de couple d'entraînement est disposé dans la chaîne cinématique d'entraînement entre la roue d'entrée et la roue de sortie.

Selon une première configuration, le moyen de limitation de couple d'entraînement est disposé entre d'une part, une roue d'entrée de l'actionneur pouvant être entraînée par ledit moteur électrique et d'autre part, un moyen d'embrayage.

Par exemple, ledit moyen de limitation de couple d'entraînement est logé dans ladite roue d'entrée. Ainsi, l'actionneur est compact et présente un faible encombrement.

Selon une deuxième configuration, le moyen de limitation de couple d'entraînement est disposé entre le moyen d'embrayage et une roue de sortie de l'actionneur.

Selon une troisième configuration, le moyen de limitation de couple d'entraînement est disposé entre un arbre de la roue de sortie et la roue de sortie.

Selon une quatrième configuration, le moyen de limitation de couple d'entraînement est disposé entre un collier de l'arbre de la roue de sortie et ledit arbre. Selon un mode de réalisation, ledit moyen de limitation de couple d'entraînement comporte :
- une rondelle pivotante solidaire en rotation de ladite roue d'entrée, et
- un moyeu d'entraînement dudit moyen de transmission de sortie, ladite rondelle pivotante étant montée sur ledit moyeu pour que le couple d'entraînement soit transmis par friction de ladite roue d'entrée audit moyen de transmission de sortie à travers ladite rondelle pivotante, le glissement en rotation de la rondelle pivotante sur ledit moyeu permettant de limiter le couple d'entraînement transmis.

En cas de couple excessif, c'est-à-dire lorsque le couple d'entraînement est supérieur à la capacité de transmission du moyen de limitation de couple, la rondelle pivotante pivote sur le moyeu par rapport à sa position initiale et n'entraîne plus le moyeu. Le couple d'entraînement est ainsi limité à la capacité de transfert de couple du système moyeu/rondelle pivotante de sorte que les contraintes mécaniques des pièces de la chaîne cinématique de l'actionneur, sont limitées. En outre, l'actionneur est simple à réaliser, sûr et ne génère pas de bruits supplémentaires.

Ladite rondelle pivotante peut être ouverte. Le dimensionnement de l'ouverture de la rondelle permet de mieux maîtriser le couple limitatif du système rondelle/moyeu souhaité.

En combinaison de ce qui vient d'être décrit, l'invention a pour objet un actionneur à assistance à la fermeture pour serrure d'ouvrant de véhicule automobile comportant :
- un moyen de transmission de sortie pour entraîner un moyen d'actionnement d'un pêne de serrure vers une position de fermeture de ladite serrure,
- un moteur électrique apte à fournir un couple d'entraînement en sortie de moteur pour entraîner ledit moyen de transmission de sortie

caractérisé en ce qu'il comporte en outre un moyen d'embrayage disposé entre d'une part, une roue d'entrée de l'actionneur pouvant être entraînée par ledit moteur électrique et d'autre part, un élément d'entraînement dudit moyen de transmission de sortie, ledit moyen d'embrayage pouvant prendre une position embrayée dans laquelle ledit moteur électrique en fonctionnement entraîne ledit moyen de transmission de sortie, et une position débrayée dans laquelle ledit moteur électrique est arrêté et est débrayé du moyen de transmission de sortie.

Le moyen d'embrayage de l'actionneur permet alors le débrayage entre le moteur électrique et le moyen de transmission de sortie dès que l'alimentation électrique est interrompue, par exemple lorsqu'un utilisateur commande l'ouverture de la serrure au cours d'un cycle de fermeture.

En outre, le moyen d'embrayage de l'actionneur rend l'actionneur réversible, c'est-à-dire que lorsque le moteur électrique est débrayé du moyen de transmission de sortie, on peut à l'inverse, actionner le moyen de transmission de sortie par le moyen d'actionnement du pêne. Ceci est particulièrement intéressant en cas de blocage de l'actionneur suite à une panne électrique impliquant l'arrêt du moteur. Il est alors possible d'inverser l'assistance à la fermeture pour ouvrir l'ouvrant sans avoir à faire tourner le moteur électrique en sens inverse, mais simplement en tirant sur le câble d'entraînement ou en activant le moyen d'actionnement du pêne.

Selon un mode de réalisation, ledit moyen d'embrayage comporte :
- un ressort enveloppant pouvant prendre une position active dans laquelle ledit ressort enveloppant embraye une roue de sortie et une position d'équilibre dans laquelle ledit ressort enveloppant est débrayé de ladite roue de sortie, et
- un moyen de commande d'embrayage pour commander la position dudit ressort enveloppant.

Par exemple, ledit moyen d'embrayage comporte une roue de contrôle dans laquelle est logé ledit ressort enveloppant et ledit moyen de commande d'embrayage comporte un frein rotatif couplé à ladite roue de contrôle pour générer un couple résistif lorsque ladite roue de contrôle est entraînée en rotation.

L'ajustement des pièces est tel que lorsque la roue d'entrée est en rotation, elle entraîne la rotation du ressort enveloppant, qui entraîne la rotation de la roue de contrôle. La roue de contrôle est alors freinée par le frein rotatif, ce qui resserre le ressort enveloppant autour de l'arbre de la roue de sortie. Le frein rotatif permet alors la commande en position active du ressort enveloppant lorsque la roue d'entrée est en rotation.

L'invention a aussi pour objet un actionneur comportant un moyen de limitation de couple d'entraînement tel que décrit précédemment ainsi qu'un moyen d'embrayage tel que décrit précédemment.

Par exemple, une extrémité dudit ressort enveloppant est fixée dans une encoche du moyeu.

Ainsi, le moyeu est couplé au ressort enveloppant lorsque le moteur est en fonctionnement et lorsque le couple du moteur est inférieur au seuil déterminé par le système moyeu/rondelle pivotante, le couple du moteur étant transmis de la roue d'entrée à la roue de sortie à travers le ressort enveloppant et la rondelle pivotante.

En position active, ledit ressort enveloppant peut présenter un diamètre resserré ou élargi. Ledit ressort enveloppant présente par exemple un diamètre interne supérieur au diamètre interne de ladite roue de contrôle dans ladite position d'équilibre, et présente un diamètre interne inférieur au diamètre externe d'un arbre de la roue de sortie dans ladite position active. Avantageusement ledit ressort enveloppant présente par exemple un diamètre externe supérieur au diamètre interne de ladite roue de contrôle dans ladite position d'équilibre, et présente un diamètre interne inférieur au diamètre externe d'un arbre de la roue de sortie dans ladite position active.

En position d'équilibre, le ressort enveloppant est écarté contre les parois internes de la roue de contrôle. Puis, lorsque la roue d'entrée tourne, le ressort enveloppant se resserre autour du collier pour transmettre le couple d'entraînement de la roue d'entrée à la roue de sortie.

Le désembrayage de la transmission du couple d'entraînement est très rapide et n'augmente pas la force nécessaire pour l'ouverture de sorte que le débrayage du moteur électrique avec le moyen de transmission de sortie ne provoque pas de ressenti au niveau de l'utilisateur. En outre, avec ce moyen d'embrayage, la serrure ne nécessite pas de pièces ou de câbles additionnels entre la poignée et l'actionneur pour contrôler le débrayage de l'actionneur par l'actionnement de la poignée.

La roue d'entrée et/ou la roue de sortie et/ou la roue de contrôle peuvent être en matériau plastique. Les matériaux plastiques permettent de réduire le poids et le coût de l'actionneur. La rondelle pivotante et le moyeu sont en métal, ce qui permet un meilleur contrôle du glissement entre ces deux pièces.

L'invention a encore pour objet un dispositif pour ouvrant de véhicule automobile à assistance à la fermeture caractérisé en ce qu'il comporte :
- un actionneur à assistance à la fermeture d'ouvrant de véhicule automobile selon l'un des objets décrit précédemment,
- une serrure d'ouvrant de véhicule automobile comportant un pêne monté pivotant et destiné à coopérer avec une gâche entre une position d'ouverture et au moins une position de fermeture dans laquelle le pêne, une fois en prise avec la gâche, assure la fermeture de ladite serrure,
- un moyen d'actionnement dudit pêne vers ladite position de fermeture.

Ledit moyen d'actionnement dudit pêne comporte par exemple un câble d'entraînement pour entraîner la rotation dudit pêne, ledit câble d'entraînement étant couplé à un moyen de transmission de sortie dudit actionneur à assistance à la fermeture.

Le câble d'entraînement permet de déporter l'actionneur de la serrure et donc de limiter l'encombrement au niveau de la serrure. Cette délocalisation de l'actionneur permet en outre de facilement présenter l'actionneur à assistance de fermeture comme une option de la serrure.

D'autres avantages et caractéristiques apparaîtront à la lecture de la description suivante d'un mode de réalisation particulier de l'invention, mais nullement limitatif, ainsi que des dessins annexés sur lesquels
- la figure 1 est une vue en perspective d'un dispositif pour ouvrant de véhicule automobile à assistance à la fermeture,
- la figure 2 est une vue de coté et en perspective d'un actionneur du dispositif de la figure 1,
- la figure 3 est une vue analogue à la figure 2 dans laquelle le boîtier de l'actionneur est ouvert,
- la figure 4 est une vue schématique en coupe d'une partie de l'actionneur,
- la figure 5 représente une vue en perspective d'éléments de l'actionneur de la figure 2,
- la figure 6 est une vue de côté d'éléments de l'actionneur de la figure 3,
- la figure 7 est une vue analogue à la figure 6 dans laquelle une roue d'entrée de l'actionneur est ouverte, et
- la figure 8a est une vue schématique d'un moyen de limitation de couple d'entraînement en fonctionnement normal de l'actionneur,
- la figure 8b est une vue schématique analogue à la figure 8a avec un couple d'entraînement supérieur à un seuil prédéterminé, et
- la figure 9 représente une vue schématique d'une unité de traitement du dispositif de la figure 1.

Sur ces figures, les éléments identiques portent les mêmes numéros de référence.

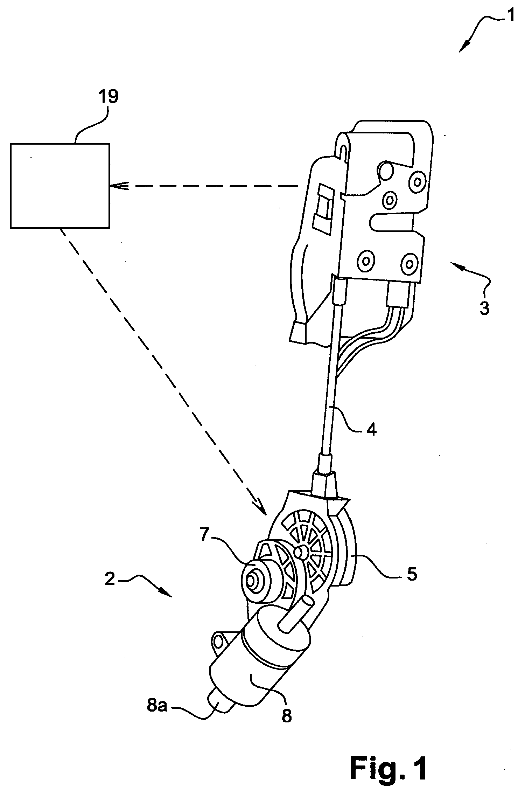

La figure 1 représente un dispositif pour ouvrant de véhicule automobile 1, tel qu'une portière, un hayon, une lunette de hayon ou un coffre.

Le dispositif 1 comporte un actionneur à assistance à la fermeture d'ouvrant 2, une serrure d'ouvrant 3 comportant un pêne monté pivotant et destiné à coopérer avec une gâche entre une position d'ouverture et au moins une position de fermeture dans laquelle le pêne, une fois en prise avec la gâche, assure la fermeture de l'ouvrant (non représentés), et un moyen d'actionnement du pêne vers la position de fermeture de la serrure.

Par exemple, le pêne présente un premier et un deuxième crans pouvant être retenus par un cliquet respectivement dans une première position de fermeture et dans une deuxième position de fermeture de la serrure. Le moyen d'actionnement entraîne alors la rotation du pêne d'une position de fermeture au premier cran vers une position de fermeture au deuxième cran. Bien entendu, on peut également prévoir que le pêne ne comporte qu'un seul cran et que la position de fermeture de la serrure vers laquelle le moyen d'actionnement entraîne le pêne correspond au blocage par le cliquet de l'unique cran du pêne.

L'actionneur à assistance à la fermeture d'ouvrant 2 est destiné à commander le déplacement du pêne de la serrure 3 pour assister la fermeture de l'ouvrant de véhicule automobile. Pour cela, l'actionneur 2 comporte un moyen de transmission de sortie 5, tel qu'une poulie, pour entraîner le moyen d'actionnement du pêne vers une position de fermeture de la serrure 3 et un moteur électrique 8 apte à fournir un couple d'entraînement en sortie de moteur 8 pour entraîner le moyen de transmission de sortie 5.

En outre, le moyen d'actionnement du pêne comporte par exemple un câble d'entraînement 4, tel qu'un câble souple en acier torsadé coulissant dans une gaine souple, pour entraîner la rotation du pêne, le câble d'entraînement 4 étant couplé au moyen de transmission de sortie 5 de l'actionneur 2. Le câble d'entraînement 4 permet de déporter l'actionneur de la serrure 2 et donc de limiter l'encombrement au niveau de la serrure 3. Cette délocalisation de l'actionneur 2 permet en outre de facilement présenter l'actionneur à assistance de fermeture comme une option de la serrure.

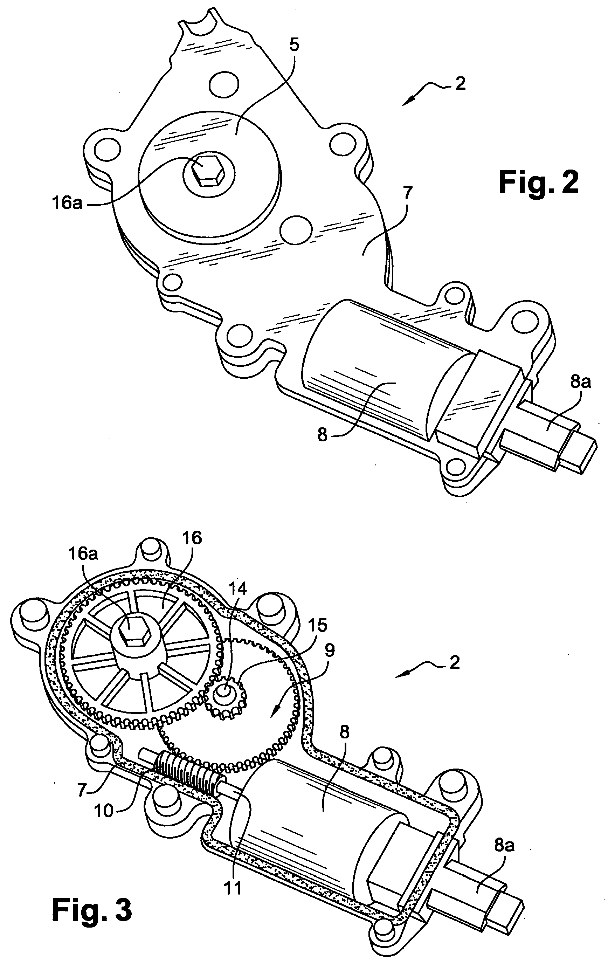

Mieux visible sur les figures 2 et 3, l'actionneur 2 comporte un boîtier 7 à l'intérieur duquel le moteur électrique 8 de l'actionneur 2 alimenté à travers un connecteur électrique 8a, délivre un couple constant d'entraînement pour entraîner un moyen d'embrayage 9, via une vis sans fin 10 en bout d'arbre du moteur 11.

L'actionneur 2 comporte en outre un moyen de limitation de couple d'entraînement pour limiter le couple d'entraînement transmis au moyen de transmission de sortie 5. La limitation de l'intensité du couple transmis au moyen de transmission de sortie 5 permet d'allonger la durée de vie des engrenages et l'utilisation de pièces en matériau plastique. On dimensionne alors le moteur électrique 8 et les pièces associées pour qu'ils fonctionnent sur une plage modérée de fonctionnement, le moyen de limitation de couple limitant le couple d'entraînement dans les situations de fonctionnement extrêmes. On limite ainsi l'encombrement, le poids et le coût des éléments de l'actionneur 2.

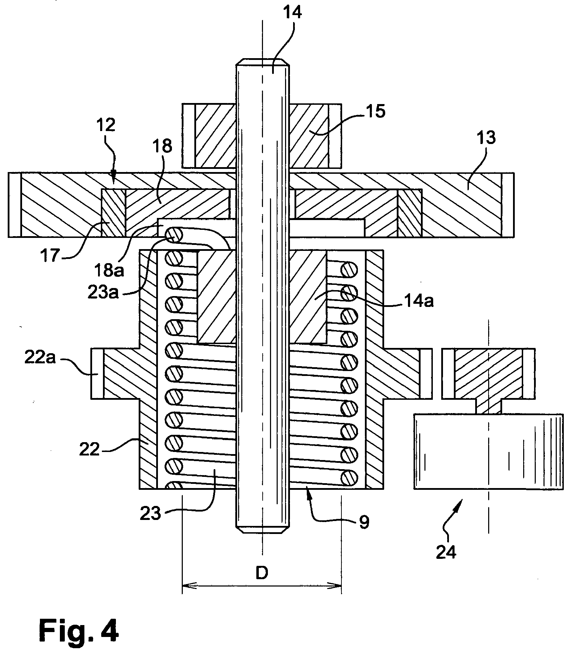

Comme on peut le voir sur la figure 4, le moyen de limitation de couple d'entraînement 12 est disposé entre d'une part, une roue d'entrée 13 de l'actionneur et d'autre part, le moyen d'embrayage 9.

La roue d'entrée 13 est montée libre autour d'un arbre de la roue de sortie 14 de l'actionneur 2. Elle comporte un pignon engrenant avec la vis sans fin 10 pour être entraînée par le moteur électrique 8.

Selon le mode de réalisation représenté, le moyen de limitation de couple d'entraînement 12 est logé dans la roue d'entrée 13. Ainsi, l'actionneur 2 est compact et présente un faible encombrement.

L'actionneur 2 comporte en outre une roue de sortie 15 solidaire de l'arbre de la roue de sortie 14 et apte à entraîner en rotation le moyen de transmission de sortie 5.

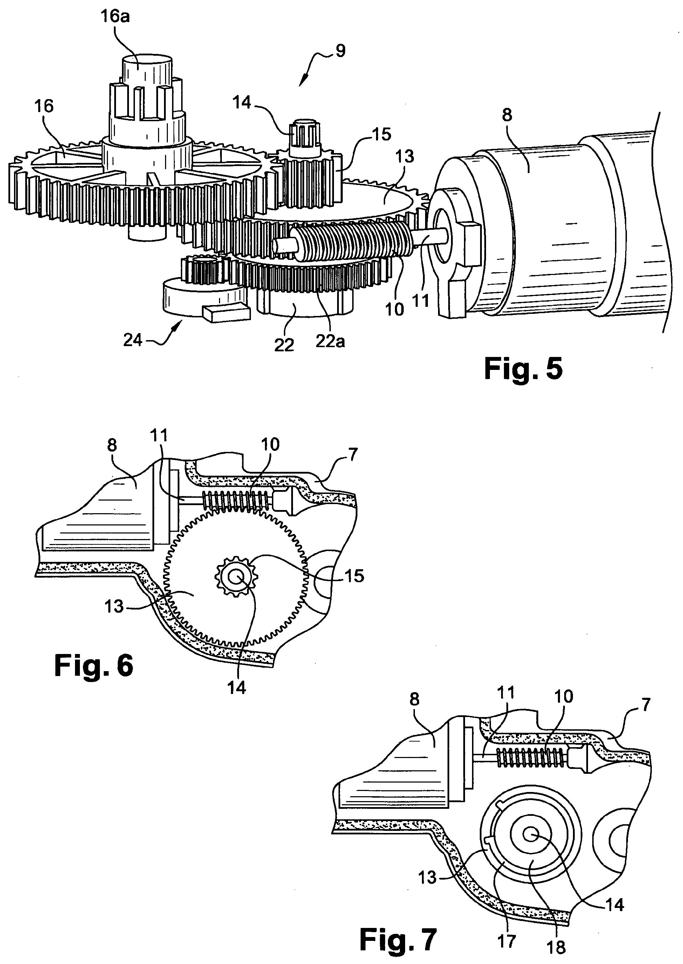

Par exemple, et comme visible sur les figures 5 et 6, la roue de sortie 15 comporte un pignon de sortie engrenant avec un engrenage de sortie 16 présentant un arbre de transmission 16a sur lequel le moyen de transmission de sortie 5 est destiné à être monté coaxialement, à l'extérieur du boîtier 7.

La roue d'entrée 13 et la roue de sortie 15 sont en matériau plastique. Les matériaux plastiques permettent de réduire le poids et le coût de l'actionneur 2.

Le moyen de limitation de couple d'entraînement 12 comporte une rondelle pivotante 17 et un moyeu 18. Le moyeu 18 peut entraîner un élément d'entraînement du moyen de transmission de sortie 5, tel que le moyen d'embrayage 9.

La rondelle pivotante 17 est solidaire en rotation de la roue d'entrée 13. La roue d'entrée 13 est par exemple surmoulée sur la rondelle pivotante 17.

La rondelle pivotante 17 peut être ouverte (voir par exemple la figure 7). Le dimensionnement de l'ouverture de la rondelle 17 permet de mieux maîtriser le couple limitatif du système rondelle 17/moyeu 18 souhaité.

La rondelle pivotante 17 et le moyeu 18 sont concentriques à la roue d'entrée 13 et sont maintenus à l'intérieur de la roue d'entrée 13 par exemple à l'aide de clips de serrage (non représentés). La rondelle pivotante 17 et le moyeu 18 sont en métal.

La rondelle pivotante 17 est montée coaxialement sur le moyeu 18 et est dimensionnée pour transmettre le couple d'entraînement de la roue d'entrée 13 au moyeu 18 par friction à travers la rondelle pivotante 17. Le glissement en rotation de la rondelle pivotante 17 sur le moyeu 18 permet de limiter le couple d'entraînement transmis.

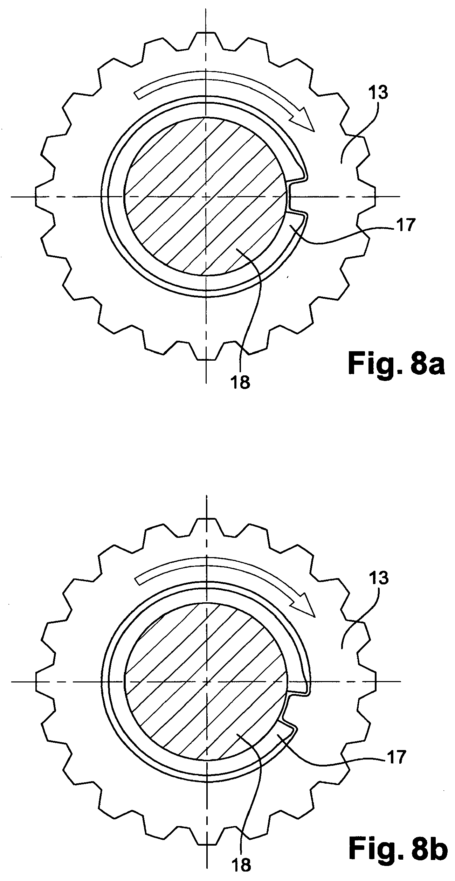

En fonctionnement normal (figure 8a), le couple d'entraînement de la roue d'entrée 13 est transmis au moyeu 18 par friction à travers la rondelle pivotante 17. La roue d'entrée 13, la rondelle pivotante 17 et le moyeu 18 tournent alors ensemble par exemple dans le sens horaire, comme l'indique la flèche représentée. Le moyeu 18 entraîne un élément d'entraînement qui lui-même entraîne le moyen de transmission de sortie 5.

En cas de couple excessif (figure 8b), c'est-à-dire lorsque le couple d'entraînement du moteur 8 est supérieur à un seuil déterminé par la capacité de transmission du moyen de limitation de couple 12, la rondelle pivotante 17 pivote par rapport au moyeu 18 dans le sens d'entraînement de la roue d'entrée et n'entraîne plus le moyeu 18 en rotation.

Le couple d'entraînement est ainsi limité à la capacité de transfert de couple du système moyeu/rondelle pivotante. Les contraintes mécaniques des pièces de la chaîne cinématique de l'actionneur sont alors réduites. En outre, l'actionneur est simple à réaliser, sûr et ne génère pas de bruits supplémentaires.

Comme on peut le voir sur la figure 4, le moyen d'embrayage 9 est disposé entre d'une part, la roue d'entrée 13 et d'autre part, un élément d'entraînement du moyen de transmission de sortie 5, tel que l'arbre de la roue de sortie 14.

Le moyen d'embrayage 9 peut prendre une position embrayée (non représentée) dans laquelle le moteur électrique 8 en fonctionnement entraîne le moyen de transmission de sortie 5, et une position débrayée (figure 4) dans laquelle le moteur électrique 8 est arrêté et est débrayé du moyen de transmission de sortie 5.

Le moyen d'embrayage 9 permet le débrayage entre le moteur électrique 8 et le moyen de transmission de sortie 5 dès que l'alimentation électrique est interrompue, par exemple lorsqu'un utilisateur commande l'ouverture de la serrure au cours d'un cycle de fermeture.

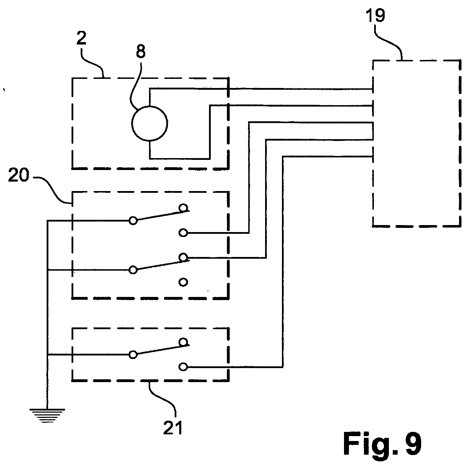

Pour cela, le dispositif à assistance de fermeture 1 comporte une unité de traitement 19 apte à piloter le moteur électrique 8 de l'actionneur et à laquelle sont reliées des sorties de commutateurs. Par exemple, et comme représenté sur la figure 9, la serrure 3 comporte un ou plusieurs commutateurs 20, pour déterminer les positions de fermeture au premier cran et au deuxième cran de fermeture du pêne et le dispositif 1 comporte un commutateur supplémentaire 21 pour déterminer la position d'ouverture de la poignée de l'ouvrant.

Les sorties des commutateurs 20, 21 sont reliées à l'unité de traitement 19. Lorsque les sorties des commutateurs de position du pêne 20 indiquent l'état de fermeture au premier cran et que la sortie du commutateur de position de la poignée 21 est inactif, l'unité de traitement 19 pilote le moteur électrique 8 de l'actionneur pour lancer un cycle d'assistance à la fermeture de l'ouvrant.

Si un changement d'état du commutateur de position de la poignée 21 intervient alors que le moteur électrique 8 est en train d'entraîner le moyen de transmission de sortie 5, l'unité de traitement 19 provoque l'arrêt du moteur électrique 8, le moyen d'embrayage 9 provoquant alors le désembrayage entre le moteur électrique 8 et le moyen de transmission de sortie 5.

Ainsi, en cas de pincement, l'utilisateur n'a qu'à tirer la poignée intérieure ou extérieure, c'est-à-dire faire une demande d'ouverture de l'ouvrant, pour arrêter l'assistance motorisée à la fermeture de la serrure par le débrayage entre le moteur électrique 8 et le moyen de transmission de sortie 5.

De plus, le moyen d'embrayage 9 rend l'actionneur réversible, c'est-à-dire que lorsque le moteur électrique 8 est débrayé du moyen de transmission de sortie 5, on peut à l'inverse, actionner le moyen de transmission de sortie 5 par le moyen d'actionnement du pêne. Ceci est particulièrement intéressant en cas de blocage de l'actionneur suite à une panne électrique impliquant l'arrêt du moteur. Il est alors possible d'inverser l'assistance à la fermeture pour ouvrir l'ouvrant sans avoir à faire tourner le moteur électrique en sens inverse, mais simplement en tirant sur le câble d'entraînement 4 ou en activant le moyen d'actionnement du pêne.

Mieux visible sur la figure 4, le moyen d'embrayage 9 comporte un ressort enveloppant 23 pouvant prendre une position active et une position d'équilibre, et un moyen de commande d'embrayage 24 pour commander la position du ressort enveloppant 23.

Le ressort enveloppant 23 est un ressort hélicoïdal, par exemple logé dans un logement ménagé dans une roue de contrôle 22 du moyen d'embrayage 9. Une extrémité 23a du ressort enveloppant 23 est fixée dans une encoche 18a du moyeu 18. La roue d'entrée en rotation entraîne alors le moyeu 18 qui entraîne en rotation le ressort enveloppant 23 du moyen d'embrayage 9.

Le moyen de commande d'embrayage 24 permet la commande en position active du ressort enveloppant lorsque la roue d'entrée 13 est en rotation. Pour cela, il comporte un frein rotatif couplé à un pignon 22a de la roue de contrôle 22 pour générer un couple résistif lorsque la roue de contrôle 22 est entraînée en rotation.

Par exemple, le moyen de commande d'embrayage 24 comporte un élément rotatif entraîné par la rotation de la roue de contrôle 22 pour tourner dans un fluide visqueux dans un sens de rotation contraire et ainsi être freiné par lui.

Dans la position d'équilibre (figure 4) alors que la roue d'entrée 13 n'est pas entraînée en rotation par le moteur 8, le ressort enveloppant 23 présente un diamètre interne d'équilibre D (au repos) supérieur au diamètre interne du logement de la roue de contrôle 22. Le ressort enveloppant 23 est alors écarté contre les parois internes du logement de la roue de contrôle 22 et est alors débrayé de l'arbre de la roue de sortie 14 et donc de la roue de sortie 15. La roue de sortie 15 et l'arbre 14 peuvent donc tourner de façon indépendante dans le ressort enroulant 23.

Dans la position active, la rotation de la roue d'entrée 13 entraîne la rotation du ressort enveloppant 23, via le moyen de limitation de couple d'entraînement 12, qui entraîne la rotation de la roue de contrôle 22 alors freinée par le frein rotatif, resserrant le ressort enveloppant 23 autour d'un collier 14a de l'arbre de la roue de sortie 14. Le ressort enveloppant 23 présente alors un diamètre interne inférieur au diamètre externe du collier 14a, lui permettant d'embrayer l'arbre 14 et la roue de sortie 15. La roue de sortie 15 tourne alors de façon synchronisée avec la roue d'entrée 13.

Ainsi, lorsque le moteur 8 est en fonctionnement et lorsque le couple d'entraînement du moteur est inférieur au seuil déterminé par le système moyeu/rondelle pivotante, le couple du moteur est transmis de la roue d'entrée 13 à la roue de sortie 15 à travers le ressort enveloppant 23 et le moyen de limitation de couple 12.

En outre, le moyen de limitation de couple d'entraînement 12 étant disposé entre la roue d'entrée 13 et le moyen d'embrayage 9, le ressort enveloppant 23 n'est pas sollicité en glissement.

Le désembrayage de la transmission du couple d'entraînement est très rapide et n'augmente pas la force nécessaire pour l'ouverture de sorte que le débrayage du moteur électrique 8 avec le moyen de transmission de sortie 5 ne provoque pas de ressenti au niveau de l'utilisateur. En outre, avec ce moyen d'embrayage, la serrure 3 ne nécessite pas de pièces ou de câbles additionnels entre la poignée et l'actionneur 2 pour contrôler le débrayage de l'actionneur 2 par l'actionnement de la poignée.

## Revendications

1. Actionneur à assistance à la fermeture pour serrure d'ouvrant de véhicule automobile (3) comportant :
- un moyen de transmission de sortie (5) pour entraîner un moyen d'actionnement d'un pêne de serrure vers une position de fermeture de ladite serrure (3),
- un moteur électrique (8) apte à fournir un couple d'entraînement en sortie de moteur pour entraîner ledit moyen de transmission de sortie (5),
- un moyen de limitation de couple d'entraînement (12) pour limiter le couple d'entraînement transmis du moteur (8) au moyen de transmission de sortie (5),
**caractérisé en ce qu'**il comporte en outre un moyen d'embrayage (9) disposé entre d'une part, une roue d'entrée de l'actionneur (13) pouvant être entraînée par ledit moteur électrique (8) et d'autre part, un élément d'entraînement dudit moyen de transmission de sortie (5), ledit moyen d'embrayage (9) pouvant prendre une position embrayée dans laquelle ledit moteur électrique (8) en fonctionnement entraîne ledit moyen de transmission de sortie (5), et une position débrayée dans laquelle ledit moteur électrique (8) est arrêté et est débrayé du moyen de transmission de sortie (5).

2. Actionneur selon la revendication 1, **caractérisé en ce que** ledit moyen de limitation de couple d'entraînement (12) est disposé entre d'une part, la roue d'entrée de l'actionneur (13) pouvant être entraînée par ledit moteur électrique (8) et d'autre part, le moyen d'embrayage (9).

3. Actionneur selon la revendication 2, **caractérisé en ce que** ledit moyen de limitation de couple d'entraînement (12) est logé dans ladite roue d'entrée (13).

4. Actionneur selon l'une des revendications 2 ou 3, **caractérisé en ce que** ledit moyen de limitation de couple d'entraînement (12) comporte :
- une rondelle pivotante (17) solidaire en rotation de ladite roue d'entrée (13), et
- un moyeu (18) d'entraînement dudit moyen de transmission de sortie (5), ladite rondelle pivotante (17) étant montée sur ledit moyeu (18) pour que le couple d'entraînement soit transmis par friction de ladite roue d'entrée (13) audit moyen de transmission de sortie (5) à travers ladite rondelle pivotante (17), le glissement en rotation de la rondelle pivotante (17) sur ledit moyeu (18) permettant de limiter le couple d'entraînement transmis.

5. Actionneur selon la revendication 4, **caractérisé en ce que** ladite rondelle pivotante (17) est ouverte.

6. Actionneur selon l'une des revendications précédentes, **caractérisé en ce que** ledit moyen d'embrayage (9) comporte :
- un ressort enveloppant (23) pouvant prendre une position active dans laquelle ledit ressort enveloppant (23) embraye une roue de sortie (15) et une position d'équilibre dans laquelle ledit ressort enveloppant (23) est débrayé de ladite roue de sortie (15), et
- un moyen de commande d'embrayage (24) pour commander la position dudit ressort enveloppant (23).

7. Actionneur selon la revendication 6, **caractérisé en ce que** ledit moyen d'embrayage (9) comporte en outre une roue de contrôle (22) dans laquelle est logé ledit ressort enveloppant (23) et **en ce que** ledit moyen de commande d'embrayage (24) comporte un frein rotatif couplé à ladite roue de contrôle (22) pour générer un couple résistif lorsque ladite roue de contrôle (22) est entraînée en rotation.

8. Actionneur selon l'une des revendications 6 ou 7, prise ensemble avec la revendication 4, **caractérisé en ce qu'**une extrémité (23a) dudit ressort enveloppant (23) est fixée dans une encoche (18a) dudit moyeu (18).

9. Actionneur selon l'une des revendications 6 à 8, **caractérisé en ce que** ledit ressort enveloppant (23) présente un diamètre externe supérieur au diamètre interne de ladite roue de contrôle (22) dans ladite position d'équilibre, et présente un diamètre interne inférieur au diamètre externe d'un arbre de la roue de sortie (14) dans ladite position active.

10. Actionneur selon l'une des revendications 7à 9, prise ensemble avec la revendication 2, **caractérisé en ce que** ladite roue d'entrée (13), ladite roue de sortie (15) et ladite roue de contrôle (22) sont en matériau plastique.

11. Dispositif pour ouvrant de véhicule automobile à assistance à la fermeture **caractérisé en ce qu'**il comporte :
- un actionneur à assistance à la fermeture d'ouvrant de véhicule automobile (2) selon l'une des revendications précédentes,
- une serrure d'ouvrant de véhicule automobile (3) comportant un pêne monté pivotant et destiné à coopérer avec une gâche entre une position d'ouverture et au moins une position de fermeture dans laquelle le pêne, une fois en prise avec la gâche, assure la fermeture de ladite serrure (3),
- un moyen d'actionnement (4) dudit pêne vers ladite position de fermeture.

12. Dispositif pour ouvrant de véhicule automobile selon la revendication 11, **caractérisé en ce que** ledit moyen d'actionnement (4) dudit pêne comporte un câble d'entraînement pour entraîner la rotation dudit pêne, ledit câble d'entraînement étant couplé à un moyen de transmission de sortie (5) dudit actionneur à assistance à la fermeture (2).

## Patentansprüche

1. Stellantrieb für Kraftfahrzeugtürschloss (3), zu sperren:
- Eine Ausgangsübertragungseinrichtung (5) zum Antrieb einer Betätigungseinrichtung eines Verriegelungsbolzens in eine geschlossene Stellung des Schlosses (3),
- Einem Elektromotor (8) angepasst ist, um ein Antriebsmoment der Motorleistung zu liefern zum Antreiben der Ausgangsübertragungseinrichtung (5),
- Ein Antriebsdrehmoment-Begrenzungseinrichtung (12) zur Begrenzung des von dem Motor (8) an die Ausgangsübertragungswege (5)
übertragene Antriebsdrehmoment, **dadurch gekennzeichnet, dass** sie ferner eine Kupplungseinrichtung (9) angeordnet sind zwischen einerseits einen Eingang des Stellrads (13) antreibbaren Elektromotor (8) und das andere seits ein Antriebselement der Ausgangsübertragungseinrichtung (5) und einer ausgerückten Position, in der der Elektromotor (8) angehalten wird und der Ausgangsübertragungseinrichtung (5) gelöst wird.

2. Antrieb nach Anspruch 1, **dadurch gekennzeichnet, daß** die Antriebsdrehmoment-Begrenzungseinrichtung (12) zwischen auf der einen Seite angeordnet ist, wobei der Aktuator Eingangsrad (13) angetrieben durch eine elektrische Einrichtung (8) und andererseits die Kupplungseinrichtung (9).

3. Antrieb nach Anspruch 2, **dadurch gekennzeichnet, daß** die Antriebsdrehmoment - Begrenzungseinrichtung (12) ist untergebracht in der Eingangsscheibe (13) ist.

4. Antrieb nach Anspruch 2 oder 3, **dadurch gekennzeichnet, daß** die Antriebsdrehmoment - Begrenzungseinrichtung (12) folgendes umfaßt:
- eine Schwenkscheibe (17) drehbar an dem genannten Antriebsrad (13), und
- eine Nabe (18) zum Antreiben der Ausgangsübertragungseinrichtung (5), wobei der Schwenkring (17) an der Nabe (18), so dass das Antriebsmoment wird durch Reibung von dem Antriebskettenrad übertragen montierten (13) zu der Ausgangsübertragungseinrichtung (5) durch den Schwenkring (17), die gleitende Drehung des Schwenkrings (17) auf die Mittel (18) zur Begrenzung der Antriebsmoment übertragen.

5. Antrieb nach Anspruch 4, **dadurch gekennzeichnet, dass** der Schwenkring (17) offen ist.

6. Antrieb nach einem der vorhergehenden Ansprüche, **dadurch gekennzeichnet, dass** die Kupplungseinrichtung (9) umfasst:
- eine Schlingfeder (23) kann eine aktive Position, in der Schlingfeder (23) ein Ausgangszahnrad (15) und eine Gleichgewichtslage, wobei die Schlingfeder (23) wird von dem Ausgangszahnrad ausgerückt greift nehmen (15) und
- ein Kupplungssteuermittel (24) zum Steuern der Position der Schlingfeder (23).

7. Antrieb nach Anspruch 6, **dadurch gekennzeichnet, dass** die Kupplungseinrichtung (9) ferner eine Steuerscheibe (22), in dem untergebracht ist, wobei die Schlingfeder (23) und daß die Kupplungssteuereinrichtung (24) eine drehbare Brems mit der Steuerscheibe (22) zur Erzeugung eines Widerstandsdrehmoments, wenn die Steuerscheibe (22) gedreht wird.

8. Antrieb nach einem der Ansprüche 6 oder 7, zusammen mit Anspruch 4, **dadurch gekennzeichnet, dass** ein Ende (23a), **dadurch gekennzeichnet** der Schlingfeder (23) in einer Kerbe (18a) befestigt an der Nabe (18) aufweist.

9. Antrieb nach einem der Ansprüche 6 bis 8, **dadurch gekennzeichnet, daß** die Schlingfeder (23) einen Außendurchmesser größer als der Innendurchmesser der Steuerscheibe (22) in der Gleichgewichtslage und hat einen kleineren Innendurchmesser der Außendurchmesser einer Welle des angetriebenen Rades (14) in der aktiven Position.

10. Antrieb nach einem der Ansprüche 7 bis 9, zusammen mit Anspruch 2, **dadurch gekennzeichnet, dass** die Eingangsscheibe (13) gekennzeichnet, wobei die Ausgangsscheibe (15) und der Steuerscheibe (22) aus Kunststoff besteht.

11. Vorrichtung zum Öffnen eines Kraftfahrzeugs mit Servoschließung, **dadurch gekennzeichnet, dass** sie umfasst:
- ein Aktuator Unterstützung beim Schließen der Kraftfahrzeugtür (2) nach einem der vorhergehenden Ansprüche,
- ein Schloss für Kraftfahrzeugtür (3) mit einem Bolzen schwenkbar gelagert ist und dazu bestimmt, mit einer Schließplatte zwischen einer Offenstellung und mindestens einer Schließstellung, in welcher der Bolzen, einmal mit dem Schlagbolzen in Eingriff zusammenwirken, sorgt für die Schließung des Schlosses (3),
- ein Betätigungsmittel (4) des Bolzens in die geschlossene Position.

12. Vorrichtung zur Kraftfahrzeugtür nach Anspruch 11, **dadurch gekennzeichnet, dass** die Betätigungsmittel (4) der Schraube einen Antriebskabel zum Antreiben der Rotation des Bolzens, wobei die Antriebskabel an eine Sendeeinrichtung gekoppelt ist Ausgang (5) der Servoschließantrieb (2).

## Claims

1. Actuator-assisted closing to lock the motor vehicle door (3) comprising:
- an output transmission means (5) for driving an actuating means of a lock bolt to a closed position of said lock (3),
- an electric motor (8) adapted to supply a drive torque in motor output for driving said output transmission means (5),
- a driving torque limiting means (12) for limiting the drive torque transmitted from the engine (8) to the output means of transmission (5),
**characterized in that** it further comprises a clutch means (9) disposed between on the one hand, an input of the actuator wheel (13) drivable by said electric motor (8) and the other hand, a drive member of said output transmission means (5), and a disengaged position wherein said electric motor (8) is stopped and disengaged from the output transmission means (5).

2. An actuator according to claim 1, **characterized in that** said driving torque limiting means (12) is arranged between on the one hand, the actuator input wheel (13) being driven by said electric means (8) and on the other hand, the clutch means (9).

3. An actuator according to claim 2, **characterized in that** said driving torque limiting means (12) is housed in said input wheel (13).

4. An actuator according to claim 2 or 3, **characterized in that** said driving torque limiting means (12) comprises:
- a pivot washer (17) rotationally fixed to said input wheel (13), and
- a hub (18) for driving said output transmission means (5), said pivoting ring (17) being mounted on said hub (18) so that the drive torque is transmitted by friction of said drive sprocket (13) to said output transmission means (5) through said pivoting ring (17), the sliding rotation of the pivoting ring (17) on said means (18) for limiting the drive torque transmitted.

5. An actuator according to claim 4, **characterized in that** said pivoting ring (17) is open.

6. An actuator according to one of the preceding claims, **characterized in that** said clutch means (9) comprises:
- a wrap spring (23) can assume an active position wherein said wrap spring (23) engages an output gear (15) and an equilibrium position wherein said wrap spring (23) is disengaged from said output gear (15), and
- a clutch control means (24) for controlling the position of said wrap spring (23).

7. An actuator according to claim 6, **characterized in that** said clutch means (9) further comprises a control wheel (22) in which is housed said wrap spring (23) and **in that** said clutch control means (24) includes a rotatable brake coupled to said control wheel (22) for generating a resisting torque when said control wheel (22) is rotated.

8. An actuator according to one of claims 6 or 7, taken together with claim 4, **characterized in that** one end (23a) of said wrap spring (23) is secured in a notch (18a) of said hub (18).

9. Actuator according to one of claims 6 to 8, **characterized in that** said wrap spring (23) has an outer diameter greater than the inner diameter of said control wheel (22) in said position of equilibrium, and has a smaller internal diameter the outer diameter of a shaft of the driven wheel (14) in said active position.

10. Actuator according to one of claims 7 to 9, taken together with claim 2, **characterized in that** said input wheel (13), said output wheel (15) and said control wheel (22) made of plastic material.

11. Device for opening a motor vehicle with power-assisted closing **characterized in that** it comprises:
- an actuator-assisted closing of motor vehicle door (2) according to one of the preceding claims,
- a lock for motor vehicle door (3) comprising a bolt pivotally mounted and intended to cooperate with a striker plate between an open position and at least a closed position in which the bolt, once engaged with the striker, ensures the closure of said lock (3),
- an actuating means (4) of said bolt to said closed position.

12. Device for motor vehicle door according to claim 11, **characterized in that** said actuating means (4) of said bolt has a drive cable for driving the rotation of said bolt, said drive cable being coupled to a transmission means output (5) of said power-assisted closing actuator (2).
